(19) Europäisches Patentamt

European Patent Office

Office européen des brevets

(11) EP 1 058 951 B1

## (12) EUROPEAN PATENT SPECIFICATION

(45) Date of publication and mention
of the grant of the patent:
**04.06.2003 Bulletin 2003/23**

(21) Application number: **99906463.7**

(22) Date of filing: **24.02.1999**

(51) Int Cl.7: **H01M 6/22**, H01M 10/40

(86) International application number:
**PCT/JP99/00834**

(87) International publication number:
**WO 99/044247 (02.09.1999 Gazette 1999/35)**

(54) **METHOD FOR PRODUCING MEMBRANE OF GEL COMPOSITE ELECTROLYTE**

VERFAHREN ZUR HERSTELLUNG EINER MEMBRAN AUS GELIERTEM VERBUNDELEKTROLYTEN

PROCEDE PERMETTANT DE PRODUIRE UNE MEMBRANE D'ELECTROLYTE COMPOSITE EN GEL

(84) Designated Contracting States:
**AT BE CH DE DK ES FI FR GB GR IE IT LI LU NL PT**

(30) Priority: **25.02.1998 JP 4305998**

(43) Date of publication of application:
**13.12.2000 Bulletin 2000/50**

(73) Proprietor: **Celanese Ventures GmbH 65926 Frankfurt am Main (DE)**

(72) Inventors:
• **YAMAMOTO, Tetsu
Kawagoe-shi, Saitama 350-0044 (JP)**
• **MURATA, Makoto
Tsurugashima-shi, Saitama 350-2201 (JP)**

(56) References cited:
EP-A- 0 416 243          WO-A-95/31835
WO-A-96/16450          WO-A-98/59388
US-A- 5 296 318          US-A- 5 691 080

• **MATSUO Y ET AL: "Ionic conductivity of poly(ethylene glycol)-LiCF3SO3-ultrafine SiO2 composite electrolytes: Effects of addition of the surfactant lithium dodecylsulfate" SOLID STATE IONICS, vol. 79, 1 July 1995, page 295-299 XP004050358**
• **"JOURNAL OF THE ELECTROCHEMICAL SOCIETY" JOURNAL OF THE ELECTROCHEMICAL SOCIETY, vol. 144, no. 2, 1 February 1997, pages 399-408, XP002082589 cited in the application**

**Description**

TECHNICAL FIELD

This invention relates to a method for producing a membrane of a gel composite electrolyte.

BACKGROUND ART

An electrochemical cell consists of a pair of electrodes and an electrolyte provided between the electrodes. The electrolyte may be a liquid or solid electrolyte. A liquid electrolyte, for example, employs an electrolyte solution formed by dissolving a lithium salt in an organic solvent.

In recent years, attention has been directed to the use of gel composite electrolytes in such batteries as lithium ones which are produced by adding silica or the like to liquid electrolytes to form gels. For example, in J. Electrochem. Soc., Vol. 144, No. 2, 1997, pp 399-408; Composite Electrolytes Prepared from Fumed Silica, Ethylene Oxide Oligomers and Lithium Salts, there are described gel composite electrolytes comprising lithium salts, ethylene glycol esters and fumed silica particles.

WO 96/16450 discloses the preparation of a gel-state elctrolyte using poymeric gelling agents.

Y. Matsuo and J. Kuwano (Solid State Ionics, 79, 1995, page 295-299) discloses the preparation of gel-state electrolyte films from mixtures of fumed silica as gelling agent, electrolyte solvent and an Lithium salt by mixing the salt and the silica first before a liquid was added to the electrolyte salt.

WO95/31835 in general discloses the common practise in the technology of film formation by casting.

US-A-5,296,318 discloses in general a gel-state electrolyte.

However, because of their limited fluidity gel composite electrolytes suffered from various problems in practical application. For example, where a gel composite electrolyte is to be used in a cell, it needs to be shaped into a membrane configuration. However, it is difficult to shape the electrolyte into a membrane of uniform thickness. Also, while the fumed silica particles are mixed in the electrolyte solution comprising the lithium salt and a solvent therefor, the viscosity of the solution rises gradually, which makes it difficult to uniformly disperse the silica particles.

SUMMARY OF THE INVENTION

Accordingly, the aim of this invention is to solve the above-mentioned problems arising during production of membranes of gel composite electrolyte. Specifically, in the invention, the gel composite electrolytes that are diluted with diluting solvents are used to produce membranes, and then the diluting solvents are removed following membrane production. This enables the formation of membranes of gel composite electrolyte having a uniform thickness, as well as the uniform dispersion of gelling agents such as silica particles in the membranes.

According to this invention, there is provided: a method for producing a membrane of gel composite electrolyte, the method comprising the steps of:

mixing a lithium salt, an electrolyte solvent having a boiling point at one atmospheric pressure of not less than 240°C and a diluting solvent having a boiling point at one atmospheric pressure of from 40° to 210°C to obtain an electrolyte solution;
wherein the electrolyte solvent is an organic solvent capable of dissolving the lithium salt and is liquid at 25°C, and the diluting solvent is an aprotic polar organic solvent and is liquid at 25°C;
mixing the electrolyte solution with a gelling agent to obtain a gel composite electrolyte;
shaping the gel composite electrolyte into a membrane configuration; and
removing the diluting solvent from the gel composite electrolyte, *wherein the gelling agent is an inorganic filler.*

In the invention, it is preferred that the mixing step comprise the steps of mixing the lithium salt with the electrolyte solvent to obtain a mixture and mixing the 10 mixture with the diluting solvent.

Preferably, the diluting solvent has a boiling point at one atmospheric pressure of from 50° to 180°C.

Furthermore, the diluting solvent preferably contains a carbonic ester, a cyclic ester, a polyether, a cyclic ether, an amide, a nitrile, a ketone, a cyclic ketone, or a sulfur compound.

Still further, it is preferred that the weight ratio of the total of the lithium salt, the electrolyte solvent and the gelling agent to the diluting solvent be in the range of 75 : 25 - 25 : 75.

Further, the electrolyte solvent preferably contains an ethylene glycol derivative having a molecular weight of from 200 to 1.000.

Still further, it is preferred that the step of removing a diluting solvent include a step of sending air to the gel composite electrolyte in a membrane configuration.

## DETAILED DESCRIPTION OF THE INVENTION

According to this invention, a lithium salt, a prescribed electrolyte solvent. and a prescribed diluting solvent are first mixed to obtain an electrolyte solution. Lithium salts known in the art can preferably be used as the lithium salt to be suited for lithium ion secondary batteries. For example, mentioned are $LiClO_4$, $LiPF_6$, $LiBF_4$, $LiAsF_6$, $LiCF_3SO_3$, $LiClF_4$, $LiAlCl_4$, $LiSbF_6$, $LiAlO_4$, LiCl, LiI, $LiN(CF_3SO_2)$, etc.

The electrolyte solvent employs a solvent that is liquid at 25°C. Its boiling point at one atmospheric pressure is not less than 240°C, and preferably not less than 245°C. It is also required that the electrolyte solvent can dissolve the lithium salts: specifically aprotic polar organic solvents are preferable.

The electrolyte solvent preferably contains an ethylene glycol derivative having a molecular weight of from 200 to 1,000, more preferably an ethylene glycol derivative having a molecular weight of from 200 to 800. As used herein, " the ethylene glycol derivative" contains a polyethylene glycol ether or a polyethylene glycol ester. The polyethylene glycol ethers include polyethylene glycol monolower alkyl ethers represented by the formula: $R-O (C_2H_4O)_nH$ (wherein R is lower alkyl of $C_1$-$C_6$, preferably methyl or ethyl, and more preferably ethyl; and n is an integer); and polyethylene glycol dilower alkyl ethers represented by the formula: $R-O(C_2H_4O)_nR$ (wherein R and n are as previously defined). The polyethylene glycol dilower alkyl ethers are particularly preferable as the electrolyte solvent, for example.

The electrolyte solvent further employs a propylene carbonate (with a boiling point of 240°C), a vinylene carbonate or the like. The above-mentioned solvents may be used individually or in admixture as the electrolyte solvent. The electrolyte solvent preferably dissolves 0.1 - 3 moles of the lithium salt per liter, more preferably 0.7 - 1.5 moles.

The diluting solvent employs a solvent that is liquid at 25°C. Its boiling point at one atmospheric pressure is from 40° to 210°C, preferably from 50° to 180°C, and more preferably from 75° to 180°C. If the boiling point of the diluting solvent is higher than 210°C, its vapor pressure is low and its removal will be time-consuming. The boiling point is also proximate to that of the electrolyte solvent and thus, a sufficient difference can not necessarily be found. On the other hand, if the boiling point of the diluting solvent is lower than 50°C, then its volatility is too high. Also, where the solvents are put to use in targets like plants, special safety precautions need to be taken, because they are liable to catch fire.

The diluting solvent employs an aprotic polar organic solvent that can preferably dissolve the lithium salts. It 25 is also preferred that the diluting solvent be mutually soluble with an electrolyte solvent.

Furthermore, the diluting solvent preferably contains a carbonic ester, a cyclic ester, a polyether, a cyclic ether, an amide, a nitrile, a ketone, a cyclic ketone, or a sulfur compound; the diluting solvent may be any single one of the carbonic ester, the cyclic ester, the polyether, the cyclic ether, the amide, the nitrile, the ketone, the cyclic ketone, and the sulfur compound.

By " the polyethers" are meant compounds having two or more ether linkages and they include, for example, ethylene glycol derivatives, 1,2-diethoxyethane, ethoxymethoxyethane, etc. The ethylene glycol derivatives may employ ones that are mentioned as the electrolyte solvent and are liquid at 25°C.

The solvents that are used as the diluting solvent are shown in Tables 1 and 2. Table 1 illustrates ethylene glycol ethers as examples of the polyethers. In Tables 1 15 and 2, the boiling points represent values at one atmospheric pressure.

Table 1

| Carbonic esters | boiling point (OC) |
|---|---|
| Dimethylcarbonate | 90 |
| Diethylcarbonate | 126-128 |
| Propylenecarbonate | 240 |
| Cyclic ester | |
| -butyrolactone | 204-205 |
| Ethylene glycol derivatives | |
| Ethylene glycol dimethyl ether | 85 |
| Ethylene glycol diethyl ether | 121 |
| Diethylene glycol dimethyl ether | 162 |
| Diethylene glycol diethyl ether | 180-190 |
| Cyclic ethers | |
| Tetrahydrofuran | 65-67 |
| 2-methyltetrahydrofuran | 78-80 |

Table 1 (continued)

| Carbonic esters | boiling point (OC) |
|---|---|
| 4-methyl-1,3-dioxolane | 82-83 |
| 1,3-dioxolane | 74-75 |

Table 2

| amides | boiling point (OC) |
|---|---|
| N,N-dimethylformamide | 153 |
| N,N-dimethylacetamide | 164.5-166 |
| nitrile<br>acetonitrile | <br>81-82 |
| ketones<br>acetone<br>2-butanone (methyl ethyl ketone)<br>2-pentanone (methyl propyl ketone)<br>3-pentanone (diethyl ketone)<br>3-methyl-2-butanone (methyl isopropyl ketone) | <br>56<br>80<br>100-110<br>102<br>94-95 |
| cyclic ketones<br>cyclohexanone<br>cyclopentanone | <br>155<br>130-131 |
| sulfur compound<br>dimethyl sulfoxide | <br>189 |

The sulfur compound employs, for example, a thioether, a thioester, a sulfone, or a sulfoxide; and the sulfoxide is preferable. The hydrogen atom bound to a carbon atom of the compound that is used as a diluting solvent may be substituted by a fluorine atom.

In this invention, it is preferred that the weight 10 ratio of the total of the lithium salt, the electrolyte solvent and the gelling agent to the diluting solvent be in the range of 75 : 25 - 25 : 75; and the ratio is more preferably in the range of 50 : 50 - 25 : 75. If the amount of the diluting solvent is excessive, its removal after the production of membranes would be time-consuming. Also, it will be difficult to maintain the porosity of the membranes within a predetermined range after removal of the diluting solvents. On the other hand, if the amount of the diluting solvent is too small, the viscosity can not be adequately lowered.

According to this invention, the lithium salt and the electrolyte solvent are mixed and then this mixture may be mixed with the diluting solvent- In this case, it is preferred that after the lithium salt has been sufficiently dissolved in the electrolyte solvent, the diluting solvent be added. Alternatively, the electrolyte solvent and the diluting solvent may be mixed in advance and then added to the lithium salt to effect mixing.

Subsequently, an electrolyte solution formed by dissolving the lithium salt in the electrolyte solvent and the diluting solvent is mixed with a gelling agent to obtain a gel composite electrolyte. The gelling agent is an inorganic filler, and more preferably fumed silica particles.

When the fumed silica particles are used as the gelling agent, two or more fumed silica particles form network structure with each other; and the lithium salt and the electrolyte solvent are entrapped inside the network structure. This is believed to decrease the fluidity and cause gelation. On the surfaces of the fumed silica particles, hydroxyl groups bound to the silicon atoms of the silica particles are present: and these hydroxyl groups are believed to participate in the reaction forming the network structure.

The fumed silica particles are characterized in that their particle diameters are small, and they are typically obtained by the hydrolysis of silicon tetrachloride in a hydrogen flame at a temperature of not less than $1,000^{\circ}C$.

$$2H_2 + O_2 - 2H_2O$$

$$SiCl_4 + 2H_2O \rightarrow SiO_2 + 4HCl$$

The fumed silica particles can preferably employ particles containing not less than 99.8% by weight of $SiO_2$. Alternatively, particles containing, less than 20% by weight of $Al_2O_3$ and not less than 80% by weight of $SiO_2$, may be used.

The mean of the primary particle diameters of the fumed silica particles is, for example, 5 - 60 nm, and it is preferably 5 - 30 nm. Therefore, fumed silica particles the surface area of which is large and which, for example, have specific surface area of 50 - 380 $m^2$/g may be chosen as desired. Typically they are not porous, nor do they have an inner surface area.

On the surfaces of the fumed silica particles, hydroxyl groups (Si-OH) bound to the silicon atoms of the silica particles are present. Preferred for use are the fumed silica particles wherein 20 - 80% of these surface hydroxyl groups is modified with hydrophobic groups; and more preferred are those wherein 30 - 70% of the surface hydroxyl groups is modified with hydrophobic groups. The hydrophobic groups include $C_4$-$C_{30}$ alkyls such as octyl. This means, for example, that octyl silane groups (Si-$C_8H_{17}$) in place of the silanol groups (Si-OH) are present on the silica surface. Modification with such hydrophobic groups improves the mechanical stability of the gel composite electrolytes. The hydrophobic group may also be provided with polymerizable functional groups such as acryloyl and methacryloyl. In the case of such hydrophobic groups, mechanical stability can be further improved by bridge formation of the functional groups.

It is preferred that based on the total amount of the lithium salt, the electrolyte solvent, and the gelling agent 2.5 - 30% by weight of the gelling agent be used; and the use of 5 - 25% by weight of the gelling agent is more preferable.

Subsequently, the gel composite electrolyte is shaped into a membrane configuration and the diluting solvent is removed from the gel composite electrolyte. This shaping step can employ shaping methods and devices that are standard in the production of membranes. For example, a coater may be used to form a membrane, and while the coater surface is covered with the gel composite electrolyte in a membrane configuration, air may be sent to remove the diluting solvent. The doctor-blade method may be used in the formation of a membrane. Namely, according to the method the membrane thickness can be altered by varying the gap between the blade and the base material. The base material may have a roll shape such as that of polyethylene terephthalate, or a plate shape such as a glass plate.

This invention will be illustrated by way of examples hereinbelow; however, it should not be limited to the following examples.

EXAMPLES

AEROSIL® R805 was used as the fumed silica particles in Example 1 and Comparative Example: it is manufactured by Degussa Inc. and imported and marketed by Nippon Aerogel Co. Ltd. The surfaces of these particles are modified with octyl groups; and the CAS registration number therefor is 92797-60-9. Their specific surface area as measured by BET method is 150±25 $m^2$/g; the mean particle diameter of their primary particles is about 7 nm; the apparent specific gravity is 50 g/L; and the $SiO_2$ content is not less than 99.8%.

EXAMPLE 1

A diluted gel composite electrolyte was first prepared.

Lithium trifluoromethanesulfonate (75.66 g) was dissolved in 524.34 g of polyethylene glycol dimethyl ether (MW 250), which served as an electrolyte solvent, under a nitrogen atmosphere to give an electrolyte solution. Next, the resulting electrolyte solution and 1250 g of 2-methoxyethyl ether, which served as a diluting solvent, were mixed. To this diluted electrolyte solution (1850 g) was added, with stirring, 150 g of the fumed silica particles the surfaces of which were modified with octyl groups. Then vigorous stirring was effected using a blender to give the diluted gel composite electrolyte.

Next, a membrane was produced from the diluted gel composite electrolyte.

The diluted gel composite electrolyte as prepared above was degassed by repeating the cycle that consists of reducing pressure and purging nitrogen at room temperature. The diluted gel composite electrolyte was coated on a roll made of polyethylene terephthalate 100 m in thickness, with varying the wet membrane thickness by using a multicoater M20OL (available from Hirano Techseed Co. Ltd.): a comma-coater head was used as the coater head. After the diluted gel composite electrolyte was coated to form a membrane, a dryer was applied to the membrane and 2-methoxyethyl ether contained therein was allowed to evaporate. A membrane of the gel composite electrolyte containing 20 weight parts of silica could thus be obtained.

By varying the roll speed, temperature of warm wind, velocity of the wind, and gap between the blade and the base material, it was possible to alter the dried membrane thickness within the range of 10 - 100 m; and membranes having smooth surfaces resulted. These conditions are illustrated in Table 3.

Table 3

|  | Roll speed (m/min) | temperature (°C) | wind velocity (m/s) | membrane thickness ( m) | gap ( m) |
|---|---|---|---|---|---|
| 1-1 | 1.1 | 63 | 12.1 | 10.0 | 130 |
| 1-2 | 2.0 | 70 | 12.1 | 90.0 | 380 |
| 1-3 | 1.0 | 60 | 12.1 | 44.0 | 250 |

Comparative Example

In contrast with Example 1, no diluting solvent was employed in the comparative example.

Lithium trifluoromethanesulfonate (28.86 g) was dissolved in 200 g of polyethylene glycol dimethyl ether under a nitrogen atmosphere to give an electrolyte solution. The resulting electrolyte solution (75 g) and 15 g of the above-mentioned fumed silica particles (Product #: R805) were mixed under strong shear to give a gel composite electrolyte containing 16.7 weight parts of silica. The resulting gel composite electrolyte had hardly any fluidity.

Using a doctor blade with a 250-M gap, this gel composite electrolyte was applied on a glass substrate. In this case, because of its low fluidity the gel composite electrolyte did not spread uniformly, thus affording no good membrane.

Accordingly, good membranes comprising gel composite electrolytes with uniform membrane thicknesses could be obtained by diluting the electrolyte solutions with diluting solvents having boiling points lower than that of polyethylene glycol dimethyl ether, which served as the electrolyte solvent.

Use of the diluting solvents can yield good membranes comprising the gel composite electrolytes with uniform membrane thicknesses.

**Claims**

1. A method for producing a membrane of gel composite electrolyte, the method comprising the steps of:

mixing a lithium salt, an electrolyte solvent having a boiling point at one atmospheric pressure of not less than 240°C and a diluting solvent having a boiling point at one atmospheric pressure of from 40° to 210°C to obtain an electrolyte solution;
wherein the electrolyte solvent is an organic solvent capable of dissolving the lithium salt and is liquid at 25°C, and the diluting solvent is an aprotic polar organic solvent and is liquid at 25°C;
mixing the electrolyte solution with a gelling agent to obtain a gel composite electrolyte;
shaping the gel composite electrolyte into a membrane configuration; and
removing the diluting solvent from the gel composite electrolyte.

2. The method according to claim 1, wherein the mixing step comprises the steps of mixing the lithium salt with the electrolyte solvent to obtain a mixture and mixing the mixture with the diluting solvent.

3. The method according to claim 1 or claim 2, wherein the diluting solvent has a boiling point at one atmospheric pressure of from 50° to 180°C.

4. The method according to claim 1, claim 2 or claim 3, wherein the diluting solvent contains a carbonic ester, a cyclic ester, a polyether, a cyclic ether, an amide, a nitrile, a ketone, a cyclic ketone, or a sulfur compound.

5. The method according to any of claims 1 - 4, wherein the weight ratio of the total of the lithium salt, the electrolyte solvent and the gelling agent to the diluting solvent is in the range of 75 : 25 - 25 : 75.

6. The method according to any of claims 1 - 5, wherein the gelling agent is an inorganic filler.

7. The method according to any of claims 1 - 6, wherein the electrolyte solvent contains an ethylene glycol derivative having a molecular weight of from 200 to 1,000.

8. The method according to any or claims 1 - 7, wherein the step of removing a diluting solvent includes a step of sending air to the gel composite electrolyte in a membrane configuration.


**Patentansprüche**

1.  Verfahren zur Herstellung einer Membran aus geliertem Verbundelektrolyten, das die folgenden Stufen umfaßt:

    Mischen eines Lithiumsalzes, eines Elektrolytlösungsmittels mit einem Siedepunkt bei Atmosphärendruck von nicht unter 240°C und eines Verdünnungslösungsmittels mit einem Siedepunkt bei Atmosphäredruck von 40 bis 210°C zur Ausbildung einer Elektrolytlösung;
    wobei das Elektrolytlösungsmittel ein organisches Lösungsmittel ist, das zum Auflösen des Lithiumsalzes befähigt ist und bei 25°C flüssig ist und wobei das Verdünnungslösungsmittel ein aprotisches polares organisches Lösungsmittel ist und bei 25°C flüssig ist;
    Mischen der Elektrolytlösung mit einem Geliermittel zur Ausbildung eines gelierten Verbundelektrolyten;
    Verformen des gelierten Verbundelektrolyten zu einer Membrankonfiguration; und
    Abtrennen des Verdünnungslösungsmittels aus dem gelierten Verbundelektrolyten.

2.  Verfahren nach Anspruch 1, worin die Mischstufe die Schritte des Vermischens des Lithiumsalzes mit dem Elektrolytlösungsmittel zur Ausbildung eines Gemisches und das Mischen des Gemisches mit dem Verdünnungsmittel umfaßt.

3.  Verfahren nach Anspruch 1 oder 2, worin das Verdünnungslösungsmittel einen Siedepunkt bei Atmosphäredruck von 50 bis 180°C aufweist.

4.  Verfahren nach Anspruch 1, 2 oder 3, worin das Verdünnungslösungsmittel einen Kohlensäureester, einen cyclischen Ester, einen Polyether, einen cyclischen Ether, ein Amid, ein Nitril, ein Keton, ein cyclisches Keton oder eine Schwefelverbindung enthält.

5.  Verfahren nach einem der Ansprüche 1 bis 4, worin das Gewichtsverhältnis der Summe aus dem Lithiumsalz, dem Elektrolytlösungsmittel und dem Geliermittel zu dem Verdünnungslösungsmittel im Bereich von 75:25 bis 25:75 liegt.

6.  Verfahren nach einem der Ansprüche 1 bis 5, worin das Geliermittel ein anorganischer Füllstoff ist.

7.  Verfahren nach einem der Ansprüche 1 bis 6, worin das Elektrolytlösungsmittel ein Ethylenglycolderivat mit einem Molekulargewicht von 200 bis 1.000 enthält.

8.  Verfahren nach einem der Ansprüche 1 bis 7, worin die Stufe des Abtrennens eines Verdünnungslösungsmittels den Schritt eines Beaufschlagens des in einer Membrankonfiguration vorliegenden gelierten Verbundelektrolyten mit Luft umfaßt.


**Revendications**

1.  Procédé pour produire une membrane d'électrolyte composite en gel, le procédé comprenant les étapes consistant à :

    -   mélanger un sel de lithium, un solvant d'électrolyte ayant un point d'ébullition sous la pression atmosphérique n'étant pas inférieure à 240°C et un solvant de dilution ayant un point d'ébullition sous la pression atmosphérique comprise entre 40°C et 210°C afin d'obtenir une solution électrolytique ;

        dans lequel le solvant d'électrolyte est un solvant organique capable de dissoudre le sel de lithium et est liquide à 25°C et le solvant de dilution est un solvant organique polaire aprotique et est liquide à 25°C ;

    -   mélanger la solution électrolytique avec un agent gélifiant en vue d'obtenir un électrolyte composite en gel ;
    -   conformer l'électrolyte composite en gel en une configuration membranaire ; et
    -   éliminer le solvant de dilution de l'électrolyte composite en gel.

2. Procédé selon la revendication 1, dans lequel l'étape de mélange comprend les étapes consistant à mélanger le sel de lithium avec le solvant d'électrolyte en vue d'obtenir un mélange, et mélanger le mélange avec le solvant de dilution.

3. Procédé selon la revendication 1 ou 2, dans lequel le solvant de dilution possède un point d'ébullition sous la pression atmosphérique comprise entre 50°C et 180°C.

4. Procédé selon la revendication 1, 2 ou 3, dans lequel le solvant de dilution contient un ester carbonique, un ester cyclique, un polyéther, un éther cyclique, un amide, un nitrile, une cétone, une cétone cyclique ou un composé du soufre.

5. Procédé selon l'une quelconque des revendications 1 à 4, dans lequel le rapport pondéral du total du sel de lithium, du solvant d'électrolyte et de l'agent gélifiant au solvant de dilution est dans la gamme allant de 75:25 à 25:75.

6. Procédé selon l'une quelconque des revendications 1 à 5, dans lequel l'agent gélifiant est une charge inorganique.

7. Procédé selon l'une quelconque des revendications 1 à 6, dans lequel le solvant d'électrolyte contient un dérivé d'éthylèneglycol ayant une masse moléculaire comprise entre 200 et 1 000.

8. Procédé selon l'une quelconque des revendications 1 à 7, dans lequel l'étape consistant à éliminer un solvant de dilution inclut une étape consistant à envoyer de l'air à l'électrolyte composite en gel dans une configuration membranaire.